# EUROPÄISCHE PATENTANMELDUNG

(11) **EP 1 798 125 A1**
(43) Veröffentlichungstag der Anmeldung: **20.06.2007**
(21) Anmeldenummer: 06025502.3
(22) Anmeldetag: 09.12.2006
(51) Int. Cl.: B60T 11/16, B60T 11/18, F16D 25/12

(54) **Kolbenstangenanbindung**

(30) Priorität: 17.12.2005 DE 102005060568
(71) Anmelder: LuK Lamellen und Kupplungsbau Beteiligungs KG, 77815 Bühl (DE)
(72) Erfinder: Christiaens, Yannick, 45470 Loury (FR)

(57) **Zusammenfassung**

Kolbenstangenanbindung an einen Kolben (3), insbesondere für einen Geberzylinder (1), wobei in einer Führungshülse (2) der Kolben (3) axial verschiebbar ist und eine Kolbenschafthülse (4) aufweist, in welcher eine Kolbenstange (7) befestigt ist, wobei erfindungsgemäß die Befestigung der Kolbenstange (7) in der Kolbenschafthülse (4) mittels eines O-Rings (6) erfolgt, der mit der Kolbenschafthülse (4) und mit der Kolbenstange (7) in Wirkverbindung steht.

## Beschreibung

Die Erfindung betrifft eine Kolbenstangenanbindung an einen Kolben nach dem Oberbegriff des ersten Patentanspruchs und findet insbesondere zur Befestigung einer Kolbenstange an einem Kolben eines Geberzylinders z.B. für die Kupplungs- oder Bremsbetätigung eines Kraftfahrzeuges Anwendung.

Aus der DE 195 23 215 B4 ist die Ausbildung eines Kolbens für einen Geberzylinder bekannt, wobei der Kolben aus einer Kolbenschafthülse mit einem Boden und zwei in der Kolbenschafthülse spielfrei angeordneten Halteschalen besteht, und die Halteschalen am pedalseitigen Ende der Kolbenschafthülse eine kugelpfannenartige Ausnehmung aufweisen, in der ein Kugelkopf einer Kolbenstange verschnappt und kraftschlüssig gehalten ist. Die Kolbenstange kann durch ihre Befestigung mittels des Kugelkopfes eine Schwenkbewegung ausführen.

In DE 199 60 335 A1 wird ein Geberzylinder beschrieben, bei welchem der Kolben ebenfalls zwei Halteschalen umfasst, die in einer Kolbenschafthülse sitzen. Die Halteschalen bilden auch hier eine kugelkalottenförmige Ausnehmung für die Aufnahme eines Kugelkopfes der Kolbenstange.

Die konstruktive Gestaltung der vorgenannten Lösungen ist relativ aufwendig, da die kugelkalottenförmigen Ausnehmungen passgenau auf den Kugelkopf abgestimmt sein müssen. Weiterhin ist das Dämpfungsverhalten dieser Ausführungen ungenügend, so dass es bei stoßartigen Belastungen zum Bruch der kugelkalottenartigen Halbschalen kommen kann.

Aufgabe der Erfindung ist es, eine einfache und kostengünstige Kolbenstangenanbindung an einen Kolben, insbesondere für einen Geberzylinder, z.B. für die Kupplungs- oder Bremsbetätigung, zu entwickeln, die eine hohe Lebensdauer gewährleistet.

Diese Aufgabe wird erfindungsgemäß mit den Merkmalen des ersten Patentanspruchs gelöst. Vorteilhafte Ausgestaltungen ergeben sich aus den Unteransprüchen.

Die Kolbenstangenanbindung an einen Kolben, insbesondere eines Geberzylinders, wobei der Kolben eine in einer Führungshülse axial verschiebbare Kolbenschafthülse aufweist, in welcher eine Kolbenstange befestigt ist, die an ihrem in der Kolbenschafthülse befestigten Ende einen Bereich mit einer sphärisch gekrümmten Oberfläche aufweist, wird erfindungsgemäß dadurch realisiert, dass die Befestigung der Kolbenstange in der Kolbenschafthülse mittels eines Befestigungselementes erfolgt, welches mit der Kolbenschafthülse und mit der Kolbenstange in Wirkverbindung steht.

Die Wirkverbindung zwischen Kolbenschafthülse, Befestigungselement und Kolbenstange wird dabei über wenigstens ein Schwingungen und/oder Stöße dämpfendes Dämpfungselement gedämpft.

Dabei ist das Dämpfungselement bevorzugt zwischen einer radial nach außen weisenden Schulter der Kolbenstange und einem Anschlag des Befestigungselementes angeordnet, wobei der Anschlag des Befestigungselementes eine Schulter oder Stirnfläche sein kann.

Bevorzugt ist das Dämpfungselement als ein O-Ring ausgebildet.

Bevorzugt liegt der O-Ring mit seinem Innendurchmesser an einem zweiten Außendurchmesser der Kolbenstange und mit seinem Außendurchmesser an einem Innendurchmesser der Kolbenschafthülse bzw. an einem Innendurchmesser des Befestigungselementes an. Das Befestigungselement ist mit der Kolbenschafthülse verbunden.

Dazu weist das Befestigungselement einen Flansch auf und ist mit diesem an einer nach außen weisenden freien Stirnseite der Kolbenschafthülse befestigt. Alternativ oder zusätzlich kann das Befestigungselement mit seinem Außendurchmesser am Innendurchmesser der Kolbenschafthülse befestigt werden Es ist möglich, das Befestigungselement durch eine form-und/oder kraft- und/oder stoffschlüssige Verbindung mit der Kolbenschafthülse zu verbinden. Dazu können beispielsweise das Befestigungselement und die Kolbenschafthülse über korrespondierende Rastelemente miteinander verbunden werden..

Die Kolbenschafthülse weist einen Bodenbereich mit einer Anlagefläche für den sphärisch gekrümmten Bereich der Kolbenstange auf, wobei die Anlagefläche eine Schwenkbewegung der Kolbenstange gewährleistet. Dazu kann die Anlagefläche als eine Schräge oder als eine gekrümmte Kontur ausgebildet sein, deren Krümmungsrichtung dem gekrümmten Bereich der Kolbenstange angepasst ist.

Der sphärisch gekrümmte Bereich der Kolbenstange kann auch an einem mit der Kolbenstange verbundenen Kugelkalottenelement ausgebildet sein, welches an der Kolbenstange befestigt ist.

Der Außendurchmesser der Kolbenstange erweitert sich vom zweiten Durchmesser im Bereich des O-Rings in Richtung zum Boden auf einen ersten Außendurchmesser und in Richtung zur freien Stirnseite der Führungshülse auf einen dritten Außendurchmesser. Zwischen zweiten und dritten Außendurchmesser ist eine radial nach außen weisende Schulter ausgebildet, die am O-Ring anliegt.

Das Befestigungselement wird z.B. mit einem radial nach außen weisenden Flansch an der nach außen weisenden freien Stirnseite der Kolbenschafthülse befestigt und liegt mit einem Außendurchmesser im Bereich des O-Rings an einem Innendurchmesser der Kolbenschafthülse an. Im Bereich des O-Rings nimmt das Befestigungselement diesen mit einem Innendurchmesser auf. In Richtung zum Flansch reduziert sich das Befestigungselement durch die radial nach innen weisende Schulter weiter auf einen Durchmesser, der geringer ist als der Außendurchmesser des O-Rings und größer als der zweite Durchmesser der Kolbenstange. Zur sicheren axialen Lagefixierung weist das Befestigungselement in Richtung zum Boden unmittelbar nach dem O-Ring radial nach innen gekröpfte (gebogene) Nasen auf, so dass der O-Ring zwischen der Schulter und den Nasen des Befestigungselementes gehalten wird. Das Dämpfungselement in Form des O-Ring steht dabei bevorzugt unter axialer und/oder radialer Vorspannung.

Weiterhin ist das Befestigungselement an seinem in Richtung zum Boden weisenden Ende radial nach innen gebogen.

Umfangsseitig ist das Befestigungselement ab seinem Flanschbereich bis zu dem Außendurchmesser, der am Innendurchmesser der Kolbenschafthülse im Bereich des O-Ringes anliegt, von der Innenkontur der Kolbenschafthülse beabstandet.

Das Befestigungselement ist z.B. als ein Blechformteil geringer Dicke ausgebildet. Dadurch wirkt es in der Art einer Feder. Das Befestigungselement kann in Richtung zum Boden ein- oder mehrfach geschlitzt sein, um eine radiale Federwirkung und somit eine einfache Montage, d.h. ein einfaches Einschieben des O-Rings bis zu dessen geforderter Position zwischen der Schulter und den Nasen zu gewährleisten.

Um ein Herausbewegen der Kolbenschafthülse aus der Führungshülse zu verhindern, ist an der Führungshülse ein endseitiger Anschlag vorgesehen in dessen Richtung die nach außen weisende freie Stirnseite der Kolbenschafthülse weist und gegen welchen die Kolbenschafthülse axial verschiebbar ist.

Dieser Anschlag besteht bevorzugt aus einem stoß- und schwingungsdämpfenden Material, wozu auch ein Dichtungsring (z.B. ein weitere O-Ring) eingesetzt werden kann.

Gegen das Eindringen von Verunreinigungen und Feuchtigkeit ist zwischen Führungshülse und Kolbenstange ein Dichtungsbalg angeordnet.

Mit der erfindungsgemäßen Lösung ist eine überraschend einfache konstruktive und flexible Ausführung der Kolbenstangenanbindung möglich. Durch die Auslegung der einzelnen Aufnahmemaße von Befestigungselement und Kolbenschafthülse für den O-Ring sowie durch die Dimensionierung des Befestigungselementes, z.B. hinsichtlich Werkstoff und Dicke, wird auf einfache Art und Weise eine lastabhängige Baugruppe hergestellt. Weiterhin ist eine spielfreie Kolbenstangenanbindung möglich. Dazu sitzt der O-Ring bevorzugt so zwischen Befestigungselement und Kolbenschafthülse, dass der Querschnitt des O-Rings radial und/oder axial zusammengedrückt wird und somit unter radialer Vorspannung steht. Durch die Federwirkung des Befestigungselementes und die erfindungsgemäße Befestigung der Kolbenstange über den O-Ring werden Vibrationen und Laststöße gedämpft bzw. eliminiert. Dadurch wird die Lebensdauer der Kolbenstangenanbindung wesentlich verlängert.

Die Erfindung wird nachfolgend anhand eines Ausführungsbeispiels und zugehöriger Zeichnungen näher erläutert.

Es zeigen:
Fig. 1: Kolbenstangenanbindung mit einem Befestigungselement 5, welches über das Dämpfungselement in Form eines 0-Ringes 6 greift,
Fig. 2: Kolbenstangenanbindung, wobei das Befestigungselement 5 am Dämpfungselement in Form eines O-Ringes 6 anliegt,

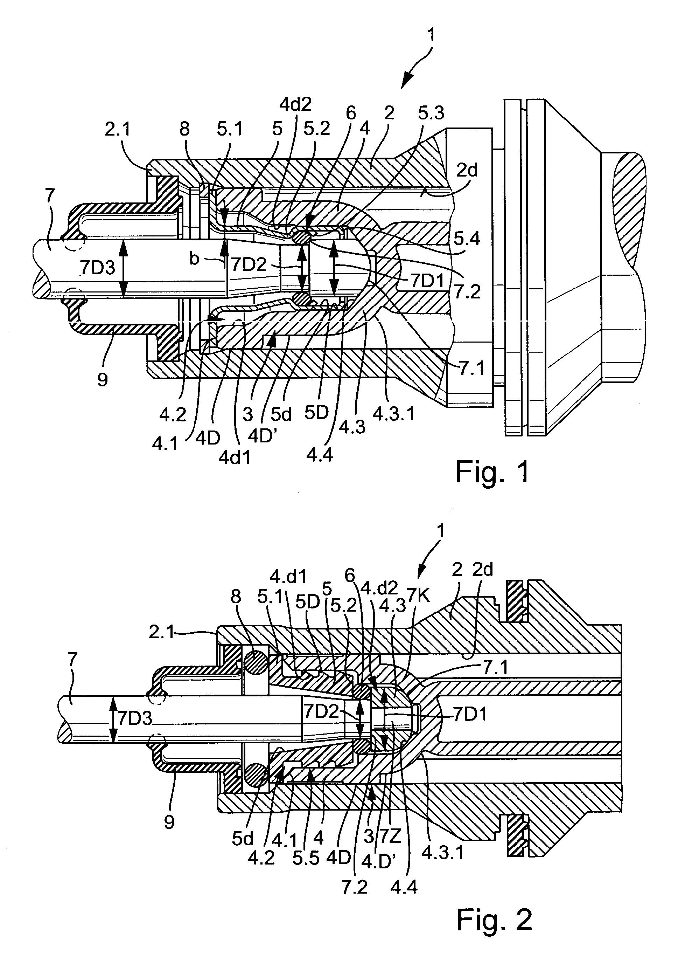

In den Zeichnungen gem. Fig. 1 und 2 ist in der Schnittdarstellung ein Ausschnitt eines Endes eines Geberzylinders im Bereich der Kolbenstangenanbindung dargestellt. Der Geberzylinder 1 weist eine Führungshülse 2 mit einem Innendurchmesser 2d auf, wobei die Führungshülse 2 die eine freie Stirnseite 2.1 hat. In der Führungshülse 2 ist ein axial verschiebbarer Kolben 3 gelagert. Der Kolben 3 weist eine Kolbenschafthülse 4 auf, die mit einem Führungsdurchmesser 4D am Innendurchmesser 2d der Führungshülse 2 anliegt. Die Kolbenschafthülse 4 weist in Richtung zur freien Stirnseite 2.1 der Führungshülse 2 eine Stirnseite 4.1 und eine Öffnung 4.2 auf. Der Öffnung 4.2 gegenüberliegend besitzt die Kolbenschafthülse 4 einen Bodenbereich 4.3. In Richtung zum Bodenbereich 4.3 ist im Vergleich zum Führungsdurchmesser 4D ein etwas zurückgesetzter Außendurchmesser 4D' vorgesehen. An der außen liegenden Seite 4.3.1 des Bodenbereiches 4.3 ist dieser abgerundet ausgebildet. Der erste Innendurchmesser 4d1 der Kolbenschafthülse 4, der sich an die Stirnseite 4.1 anschließt, verjüngt sich in Richtung zum Bodenbereich 4.3 auf einen zweiten Innendurchmesser 4d2. An den zweiten Innendurchmesser 4d2 schließt sich eine Gleitfläche in Form einer Schräge 4.4 an, die sich in Richtung zum Bodenbereich 4.3 verjüngt.

In der Kolbenschafthülse 4 sitzt ein Befestigungselement 5. Das Befestigungselement 5 ist als ein rotationssymmetrisches Bauteil ausgebildet und stellt eine Wirkverbindung zwischen der Kolbenschafthülse 4 des Kolbens 3 und der Kolbenstange 7 her. Das Befestigungselement liegt mit einem radial nach außen weisenden Flansch 5.1 an der nach außen weisenden Stirnseite 4.1 der Kolbenschafthülse 4 an.

Durch das Befestigungselement 5 ragt bis zum Bodenbereich 4.3 der Kolbenschafthülse 4 die Kolbenstange 7, die an ihrem zum Boden weisenden Ende eine sphärisch gekrümmte Oberfläche 7.1 aufweist und mit dieser an einer Gleitfläche in Form der Schräge 4.4 der Kolbenschafthülse 4 anliegt. Die Kolbenstange 7 besitzt aus Richtung der sphärisch gekrümmten Oberfläche 7.1 bis zum Dämpfungselement in Form des O-Rings 6 einen ersten Außendurchmesser 7D1, der etwas größer ist als der Innendurchmesser 6d des O-Rings 6. Der erste Außendurchmesser 7D1 der Kolbenstange 7 verjüngt sich auf einen zweiten Außendurchmesser 7D2, auf welchem der O-Ring mit seinem Innendurchmesser sitzt. Zwischen dem ersten Außendurchmesser 7D1 und dem zweiten Außendurchmesser 7D2 besitzt die Kolbenstange 7 eine radial nach außen weisende Schulter 7.2, die am O-Ring 6 anliegt. Der Durchmesser der Kolbenstange 7 erweitert sich in Richtung zur Stirnfläche 2.1 der Führungshülse 2 auf einen dritten Durchmesser 7D3.

Um ein Herausbewegen der Kolbenschafthülse 4 aus der Führungshülse 2 zu verhindern, ist an der Führungshülse 2 ein endseitiger radial nach innen weisender Anschlag 8 vorgesehen, in dessen Richtung die nach außen weisende freie Stirnseite 4.2 der Kolbenschafthülse 4 weist und gegen welchen die Kolbenschafthülse 4 axial verschiebbar ist.

Gegen das Eindringen von Verunreinigungen und Feuchtigkeit ist zwischen Führungshülse 2 und Kolbenstange 2 ein Dichtungsbalg 9 zwischen Innendurchmesser der Führungshülse 2 und dritten Außendurchmesser 7D3 der Kolbenstange 7 angeordnet.

Gem..Fig. 1 und 2 ist der Innendurchmesser des Befestigungselementes 5 so zu dimensionierten, dass die erforderliche Schwenkbewegung mit der Kolbenstange 7 realisierbar ist.

Gem. Fig. 1 ist das Befestigungselement 5 als Blechformteil oder Kunststoffteil mit einer (vorzugsweise relativ geringen) Wanddicke b ausgebildet und liegt mit einem Außendurchmesser 5D am zweiten Innendurchmesser 4d2 der Kolbenschafthülse 4 an. Im Bereich des Außendurchmessers 5D nimmt das Befestigungselement 5 an seinem Innendurchmesser 5d den O-Ring 6 auf. Nach diesem in Fig. 1 dargestellten Ausführungsbeispiel reduziert sich das Befestigungselement 5 in Richtung zum Flansch 5.1durch eine radial nach innen weisende Schulter 5.2, die am O-Ring 6 anliegt, auf einen Innendurchmesser 5d', der etwas geringer ist als der Innendurchmesser 5d. Zur sicheren axialen Lagefixierung weist das Befestigungselement 5 in Richtung zum Bodenbereich 4.3 der Kolbenschafthülse 4 unmittelbar nach dem O-Ring 6 radial nach innen gekröpfte (gebogene) Nasen 5.3 auf, so dass der O-Ring 6 zwischen der Schulter 5.2 und den Nasen 5.3 des Befestigungselementes 5 gehalten wird. Weiterhin ist hier das Befestigungselement 5 an seinem in Richtung zum Boden weisenden Ende 5.4 radial nach innen gebogen. Der Außendurchmesser des O-Rings ist kleiner als der Innendurchmesser 5d des Befestigungselementes 6 im Bereich der Nasen 5.3, so dass dieser Radian zusammengepresst wird und unter Vorspannung steht.

Die gem. Fig. 1 einteilige Kolbenstange 7 wird in der Kolbenschafthülse 4 zwischen der radial nach außen weisenden Schulter 7.2 der Kolbenstange 7 und der Schulter 5.2 sowie den Nasen 5.3 des Befestigungselementes 5 axial fixiert. Somit steht die Kolbenstange 7 über den O-Ring 6 und das Befestigungselement 5 mit der Kolbenschafthülse 4 und somit mit dem Kolben 3 in Wirkverbindung.

Zur Montage der Kolbenstange 7 mit der Kolbenschafthülse 4 wird gem. der in Fig. 1 dargestellten Vatiante zunächst der O-Ring 6 auf die Kolbenstange 7 aufgeschoben und hinter der Schulter 7.2 platziert. Danach wird das Befestigungselement 5 ebenfalls auf die Kolbenstange 7 aufgeschoben, wobei dieses Befestigungselement 5 an der Schulter 5.2 am O-Ring 6 anschlägt. Anschließend wird die so vormontierte Kolbenstange 7 in die Kolbenschafthülse 4 soweit eingeschoben, bis das Ende der Kolbenstange 7 den Boden der Kolbenschafthülse 4 erreicht hat. Danach wird in die dafür vorgesehene Ausnehmung das Federelement 8, das als Anschlag und somit als axiale Arretierung für die Kolbenstange 7 fungiert, in den Geberzylinder eingeführt.

Fig. 2 zeigt ein weiteres Ausführungsbeispiel, nach welchem zwischen dem Außendurchmesser 5D des Befestigungselementes 5 und dem ersten Innendurchmesser 4d1 der Kolbenschafthülse eine Wirkverbindung hergestellt wurde. Diese Wirkverbindung wird dadurch erzeugt, dass das Befestigungselement 5 über am Außendurchmesser 5D vorhandene Rastelemente 5.5 mit der Kolbenschafthülse 4 verbunden ist, die an ihrem ersten Innendurchmesser 4d1 entsprechende nicht näher bezeichnete Ausnehmungen aufweist. Das Befestigungselement 5 ist hülsenartig ausgebildet und liegt mit seinem Flansch 5.1 an der Stirnseide 4.1 der Kolbenschafthülse 4 an. Das Befestigungselement 5 greift in diesem Fall nicht über den O-Ring 6, sondern liegt lediglich mit seiner Schulter 5.2 (die hier eine Stirnfläche des Befestigungselementes 5 bildet) am O-Ring 6 an. Die Rastelemente 5.5 des Befestigungselementes 5 weisen bevorzugt eine sägezahnartige Struktur auf, die Einschieben/Einpressen in die Kolbenschafthülse gewährleistet und ein Lösen dieser Verbindung verhindert. Es wird somit zwischen dem Befestigungselement 5 und der Kolbenschafthülse 4 eine form- und kraftschlüssige Verbindung hergestellt.

Gem. Fig. 2 weist die Kolbenstange 7, die an ihrem zum Boden weisenden Ende eine sphärisch gekrümmte Oberfläche 7.1 auf, die an einem an der Kolbenstange 7 angebundenen separaten Kugelkalottenelement 7K ausgebildet ist, welches auf einem Zapfen 7Z der Kolbenstange 7 befestigt ist. Das Kugelkalottenelement 7K weist ebenfalls die Schulter 7.2 sowie den ersten Außendurchmesser 7D1 der Kolbenstange 7 auf. An der Schulter 7.2 liegt dabei der O-Ring 6 an.

Der O-Ring 6 sitzt somit zwischen der Schulter 5.2 (Stirnfläche) des Befestigungselementes 5 und der Stirnfläche 7.2 der Kolbenstange 7, die hier am Kugelkalottenelement 7K ausgebildet ist. Der O-Ring 6 sitzt mit seinem Innendurchmesser auf dem Außendurchmesser 7D2 der Kolbenstange 7 und mit seinem Außendurchmesser im Innendurchmesser 4d2 der Kolbenschafthülse 4.

Die Montage erfolgt analog der Ausführung in Fig. 1, nur dass das Befestigungselement 5 den O-Ring 6 nicht umgreift, sondern an diesen angepresst wird. Dadurch wird der O-Ring axial unter Vorspannung gesetzt und, wenn dessen Außendurchmesser etwas größer ist als der Innendurchmesser 4d2 der Kolbenschafthülse 4 in diesen gepresst und auch radial unter Vorspannung gesetzt.

Der Anschlag 8 ist hier in ebenfalls Form eines Dichtungsrings ausgebildet, so dass eine dämpfende Wirkung bei Anschlagen des Flansches 5.1 des Befestigungselementes 5 erzielt wird.

Diese vorgenannt beschriebenen erfindungsgemäßen Befestigungsmöglichkeiten der Kolbenstange 7 gewährleisten eine Dämpfung von Schwingungen und Stößen und tragen somit zur Erhöhung der Lebensdauer der Kolbenstangenanbindung bei.

### Bezugszeichenliste

- 1: Geberzylinder
- 2: Führungshülse
- 2d: Innendurchmesser der Führungshülse
- 2.1: freie Stirnseite der Führungshülse
- 3: Kolben
- 4: Kolbenschafthülse
- 4D: Führungsdurchmesser der Kolbenschafthülse
- 4D': zurückgesetzter Außendurchmesser
- 4d1: erster Innendurchmesser der Kolbenschafthülse
- 4d2: zweiter Innendurchmesser der Kolbenschafthülse
- 4.1: Stirnseite der Kolbenschafthülse
- 4.2: Öffnung der Kolbenschafthülse
- 4.3: Bodenbereich der Kolbenschafthülse
- 4.3.1: außen liegende Seite des Bodenbereiches
- 4.4: Schräge in der Kolbenschafthülse 4
- 5: Befestigungselement
- 5.1: Flansch
- 5.2: Schulter
- 5.3: Nasen
- 5.4: Ende
- 5.5: Rastelemente
- 5D: Außendurchmesser des Befestigungselementes
- 5d: Innendurchmesser des Befestigungselementes
- 5d': Innendurchmesser
- b: Dicke des Befestigungselementes
- 6: O-Ring
- 7: Kolbenstange
- 7.1: sphärisch gekrümmten Oberfläche
- 7.2: Schulter
- 7D1: erster Außendurchmesser der Kolbenstange
- 7D2: zweiter Außendurchmesser der Kolbenstange
- 7D3: dritter Außendurchmesser der Kolbenstange
- 7K: Kugelkalottenelement
- 7Z: Zapfen
- 8: Anschlag / Federelement
- 9: Dichtungsbalg
- b: Wanddicke des Befestigungsteils

## Patentansprüche

1. Kolbenstangenanbindung an einen Kolben, insbesondere für einen Geberzylinder (1), wobei in einer Führungshülse (2) der Kolben (3) axial verschiebbar ist und eine Kolbenschafthülse (4) aufweist, in welcher eine Kolbenstange (7) befestigt ist, **dadurch gekennzeichnet, dass** die Befestigung der Kolbenstange (7) in der Kolbenschafthülse (4) mittels eines Befestigungselementes erfolgt, welches mit der Kolbenschafthülse (4) und mit der Kolbenstange (7) in Wirkverbindung steht.

2. Kolbenstangenanbindung nach Anspruch 1, **dadurch gekennzeichnet**, die Wirkverbindung zwischen Kolbenschafthülse (4), Befestigungselement (5) und Kolbenstange (7) über wenigstens ein Schwingungen und/oder Stöße dämpfendes Dämpfungselement gedämpft ist.

3. Kolbenstangenanbindung nach Anspruch 1 oder 2, **dadurch gekennzeichnet, dass** das Dämpfungselement zwischen einer radial nach außen weisenden Schulter (7.4) der Kolbenstange (7) und einem Anschlag des Befestigungselementes (5) sitzt.

4. Kolbenstangenanbindung nach Anspruch 3, **dadurch gekennzeichnet, dass** der Anschlag des Befestigungselementes eine Schulter (5.2) oder Stirnfläche ist.

5. Kolbenstangenanbindung nach einem der Ansprüche 1 bis 4, **dadurch gekennzeichnet, dass** das Dämpfungselement als ein O-Ring (6) ausgebildet ist.

6. Kolbenstangenanbindung nach Anspruch 5, **dadurch gekennzeichnet, dass** der O-Ring (6) mit seinem Innendurchmesser (6d) auf einem zweiten Außendurchmesser (7D2) der Kolbenstange 7 sitzt.

7. Kolbenstangenanbindung nach Anspruch 5, **dadurch gekennzeichnet, dass** der O-Ring (6) mit seinem Außendurchmesser (6D) an einem Innendurchmesser der Kolbenschafthülse (4) oder an einem Innendurchmesser (5d) des Befestigungselementes (5) anliegt.

8. Kolbenstangenanbindung nach einem der Ansprüche 1 bis 7, **dadurch gekennzeichnet, dass** das Dämpfungselement unter axialer und/oder radialer Vorspannung steht.

9. Kolbenstangenanbindung nach einem der Ansprüche 1 bis 8, **dadurch gekennzeichnet, dass** das Befestigungselement (5) an der Kolbenschafthülse (4) befestigt ist.

10. Kolbenstangenanbindung nach Anspruch 9, **dadurch gekennzeichnet, dass** das Befestigungselement (5) einen Flansch (5.1) aufweist und mit diesem an einer nach außen weisenden freien Stirnseite (4.1) der Kolbenschafthülse (4) befestigt ist.

11. Kolbenstangenanbindung nach Anspruch 9 oder 10, **dadurch gekennzeichnet, dass** das Befestigungselement (5) mit seinem Außendurchmesser am Innendurchmesser der Kolbenschafthülse (4) befestigt ist.

12. Kolbenstangenanbindung nach einem der Ansprüche 9 bis 11, **dadurch gekennzeichnet, dass** das Befestigungselement (5) durch eine form- und/oder kraft- und/oder stoffschlüssige Verbindung mit der Kolbenschafthülse verbunden ist.

13. Kolbenstangenanbindung nach einem der Ansprüche 9 bis 12, **dadurch gekennzeichnet, dass** das Befestigungselement und die Kolbenschafthülse über korrespondierende Rastelemente miteinander verbindbar sind.

14. Kolbenstangenanbindung nach einem der Ansprüche 1 bis 13, **dadurch gekennzeichnet, dass** die Kolbenschafthülse (4) einen Bodenbereich (4.3) mit einer Anlagefläche (4.4) für einen sphärisch gekrümmten Bereich (7.1) der Kolbenstange (7) aufweist, wobei die Anlagefläche eine Schwenkbewegung der Kolbenstange (7) gewährleistet.

15. Kolbenstangenanbindung nach Anspruch 14, **dadurch gekennzeichnet, dass** die Anlagefläche als eine Schräge (4.4) ausgebildet ist.

16. Kolbenstangenanbindung nach Anspruch 14 oder 15, **dadurch gekennzeichnet, dass** die Anlagefläche als eine gekrümmte Kontur ausgebildet ist, deren Krümmungsrichtung dem sphärisch gekrümmten Bereich (7.1) der Kolbenstange (7) angepasst ist.

17. Kolbenstangenanbindung nach einem der Ansprüche 14 bis 16, **dadurch gekennzeichnet, dass** die Kolbenstange (7) im Bereich der Kolbenschafthülse (4) aus Richtung des Bodenbereiches (4.3) einen sich an den sphärisch gekrümmten Bereich (7.1) aufweist, an den sich ein Bereich mit einem ersten Außendurchmesser (7D1) anschließt und dass sich der Außendurchmesser durch die radial nach außen weisende Schulter (7.2) auf den zweiten Außendurchmesser (7D2), auf welchem der O-Ring (6) sitzt, verringert und sich anschließend auf einen dritten Außendurchmesser D3 erweitert.

18. Kolbenstangenanbindung nach Anspruch 17, **dadurch gekennzeichnet, dass** der sphärisch gekrümmte Bereich (7.1) mit dem sich anschließenden Durchmesser 7D1 und die Schulter (7.2) an einem mit der Kolbenstange verbundenen Kugelkalottenelement (7K) ausgebildet sind.

19. Kolbenstangenanbindung nach einem der Ansprüche 1 bis 18, **dadurch gekennzeichnet, dass** das Befestigungselement (5) mit einem Außendurchmesser (5D) im Bereich des O-Rings (6) an einem Innendurchmesser (4d2) der Kolbenschafthülse (4) anliegt.

20. Kolbenstangenanbindung nach einem der Ansprüche1 bis 19, **dadurch gekennzeichnet, dass** das Befestigungselement (5) im Bereich des O-Rings (6) diesen mit einem Innendurchmesser (5d) aufnimmt und sich durch die radial nach innen weisende Schulter (5.2) auf einen Durchmesser (5d') reduziert.

21. Kolbenstangenanbindung nach Anspruch 20, **dadurch gekennzeichnet, dass** das Befestigungselement (5) in Richtung zum Bodenbereich (4.3) nach dem O-Ring (6) radial nach innen gekröpfte (gebogene) Nasen (5.4) aufweist, so dass der O-Ring (6) zwischen der Schulter (5.3) und den Nasen (5.4) axial am Befestigungselement (5) fixiert ist.

22. Kolbenstangenanbindung nach Anspruch einem der Ansprüche 1 bis 21, **dadurch gekennzeichnet, dass** das Befestigungselement (5) an seinem in Richtung zum Boden weisenden Ende (5.4) radial nach innen gebogen ist.

23. Kolbenstangenanbindung nach Anspruch 22, **dadurch gekennzeichnet, dass** das Befestigungselement (5) umfangsseitig ab seinem Flanschbereich (5.1) bis zu dem Außendurchmesser (5D) umfangsseitig von der Innenkontur der Kolbenschafthülse (4) beabstandet ist.

24. Kolbenstangenanbindung nach einem der Ansprüche 1 bis 23, **dadurch gekennzeichnet, dass** die Führungshülse (2) einen endseitigen Anschlag (8) aufweist, in dessen Richtung die nach außen weisende freien Stirnseite (4.1) der Kolbenschafthülse (4) weist und gegen welchen die Kolbenschafthülse (4) axial verschiebbar ist.

25. Kolbenstangenanbindung nach Anspruch 23, **dadurch gekennzeichnet, dass** der Anschlag aus einem dämpfenden Material besteht.

26. Kolbenstangenanbindung nach Anspruch 24 oder 25, **dadurch gekennzeichnet, dass** der Anschlag (8) ein Dichtungsring ist.

27. Kolbenstangenanbindung nach einem der Ansprüche 1 bis 26, **dadurch gekennzeichnet, dass** zwischen Führungshülse (2) und Kolbenstange (7) ein Dichtungsbalg (9) angeordnet ist.
